# EUROPEAN PATENT APPLICATION

(11) **EP 1 947 845 A1**
(43) Date of publication of application: **23.07.2008**
(21) Application number: 07254767.2
(22) Date of filing: 10.12.2007
(51) Int. Cl.: H04N 5/782, H04N 5/445

(54) **Programmable recording apparatus for TV programs**

(30) Priority: 12.12.2006 JP 2006333951
(71) Applicant: Hitachi, Ltd., Chiyoda-ku Tokyo (JP)
(72) Inventor: Tsuji, Daisuke, Tokyo 100-8220 (JP)
(74) Representative: Calderbank, Thomas Roger

(57) **Abstract**

A program recording apparatus in which the maximum number of recording reservations in the same time zone is determined by the number of tuners included in the apparatus. The apparatus includes a program guide generating unit (105) for generating a program guide (201) which displays a balloon message (207) in the case where the number of the programs indicated in the program cells (206) and already reserved for recording in the time zone associated with a program currently selected and defined by a frame (205) is equal to the maximum number of recording reservations, a balloon message (207) is displayed, thereby making it possible to easily understand visually whether the program selected on the program guide can be reserved for recording or not.

## Description

This invention relates to a timer programmed recording apparatus for receiving and recording TV broadcast programs and program information, or in particular, to a technique for displaying a program guide on the screen.

In recent years, a digital transmission system has come to find application in which a TV signal in digital form such as in the terrestrial digital broadcasting is transmitted and received by each home to view a TV program. The system of this type can secure many channels, and therefore, can broadcast a great number of programs. In this system, the information on an electronic program guide (EPG) showing the contents of a multiplicity of broadcast programs are transmitted to the receiver of each home together with the video and audio information of programs. In each home, the user operates the receiver and displays the EPG as a program guide on the TV display. The user can search for, tune in, view and record the desired program on the program guide on the TV display. Further, the reservation for viewing or recording of the desired program can be made using the program guide. Also, the information on the reserved programs can be displayed as a list of reserved programs, or an icon indicating the reservation can be displayed in one program column (hereinafter referred to as the cell) of the program guide. In this way, the user can confirm the reserved program.

The receivers presently available each include a plurality of tuners whereby a plurality of programs may be recorded or reserved for recording at the same time in the same time zone. With regard to these receivers, JP-A-2004-153655 discloses a technique wherein in the case where recording reservations exceeding a maximum number of recording reservations (equal to the number of the tuners) are made on the EPG, a message is displayed to reset the recording reservations for a plurality of the programs reserved for recording.

In order to display the aforementioned message (the message urging the user to reset the plurality of the programs reserved for recording in the order of priority) according to JP-A-2004-153655, the user is required to set the cursor to the cell in the time zone having the maximum number of recording reservations, and click the "enter" button for determining the particular cell to display a message including the choices for selecting a particular process to be executed for the program in the cell. Further, the operation is required to select the recording reservation from the choices.

Specifically, according to the technique described in JP-A-2004-153655, the user is required to perform various operations and processes on the program guide to confirm whether the desired program can be reserved for recording, and therefore, may feel bothersome.

This invention has been achieved in view of this problem, and a preferred aim thereof is to provide a technique whereby the user may quickly and easily confirm whether the desired program on the program guide can be reserved for recording or not.
According to one aspect of the invention, there is provided a program recording reservation apparatus wherein in the case where the number of recording reservations in the time zone associated with a program designated on the program guide is equal to the maximum number of recording reservations in the particular time zone, a message is displayed on the screen in response to the program designation.

Also, in the case where the designated program cannot be reserved for recording, an item for resetting the reservation of the programs already reserved for recording may be displayed at the same time as the message, and by selecting the item, the programs already reserved for recording may be reset.

According to this invention, assume that in the case where a program is designated on the program guide, the number of recording reservations in the time zone associated with the designated program is equal to the maximum number of recording reservations in the particular time zone and the selected program cannot be reserved for recording. In such a case, a message to the effect that the reservation for recording is impossible is displayed in response to the designation, and therefore, the user can easily and quickly confirm whether the program desired for recording can be recorded or not.

Other objects, features and advantages of the invention will become apparent from the following description of the embodiments of the invention taken in conjunction with the accompanying drawings.

In the drawings
Fig. 1 is a diagram showing the functional configuration of a program recording reservation apparatus according to an embodiment of the invention.
Fig. 2 is a diagram showing an example of a program guide and a balloon message displayed by the program recording reservation apparatus with a program reserved for recording according to an embodiment of the invention.
Fig. 3 is a flowchart for determining whether a selected program can be reserved for recording or not according to an embodiment of the invention.
Fig. 4 is a diagram showing an example of a reservation resetting screen displayed by the program recording reservation apparatus according to an embodiment of the invention.
Fig. 5 is a flowchart showing the operation and display of the reservation resetting screen displayed by the program recording reservation apparatus according to an embodiment of the invention.
Fig. 6 is a schematic diagram showing a remote controller used for the program recording reservation apparatus according to an embodiment of the invention.

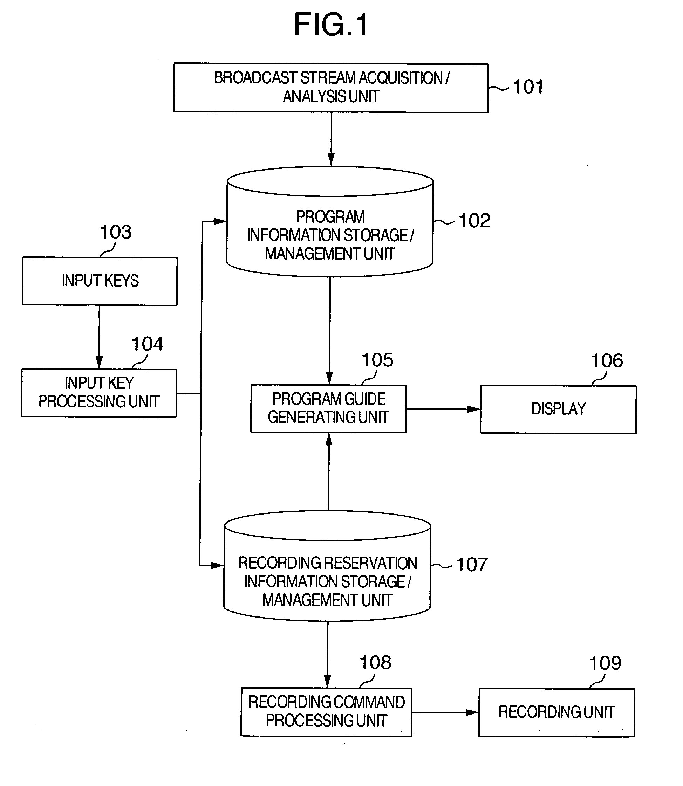

An embodiment of the invention is explained below with reference to the drawings. Fig. 1 shows an example of the general configuration of the program recording reservation apparatus according to this embodiment. The program recording reservation apparatus according to this embodiment is applicable to a TV display unit having built therein a recording device such as a DVD recorder, a HDD recorder or a VTR and a HDD. The program recording reservation apparatus according to this embodiment includes a plurality of tuners for receiving the TV broadcast. By operating these tuners independently of each other, a plurality of different programs can be recorded at the same time. The plurality of the tuners may be arranged in either one device or a plurality of devices connected to each other. For example, the TV display unit having a HDD built therein is regarded as a main device and the DVD recorder, the HDD recorder, etc. connected thereto as auxiliary devices, so that the tuners arranged in these devices are controlled by the TV display unit constituting the main device thereby to record a plurality of different programs at the same time.

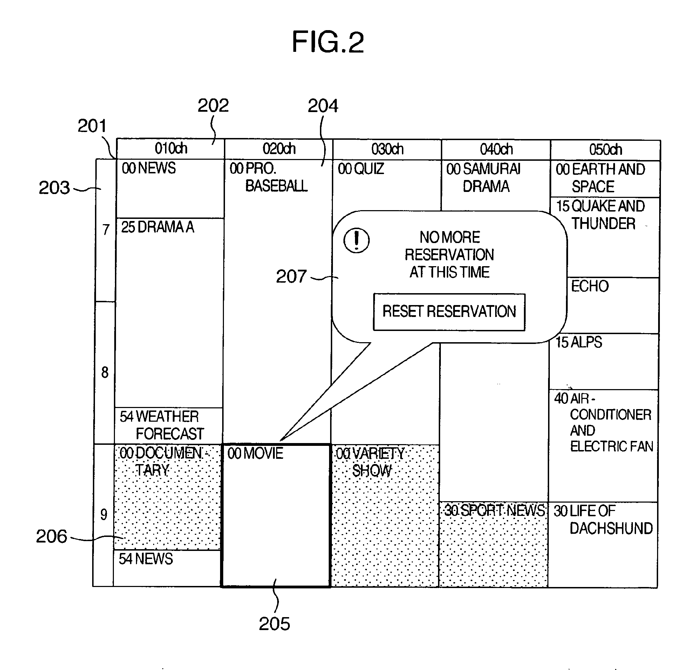

In Fig. 1, a broadcast stream acquisition/analysis unit 101 acquires a broadcast stream from a broadcast station at the receiving end, and by extracting and analyzing the EPG data making up the program information contained in the broadcast stream, outputs the result to a program information storage/management unit 102. The program information storage/management unit 102 operates to store and manage the EPG data from the broadcast stream acquisition/analysis unit 101. The EPG data transmitted on the broadcast stream is updated at predetermined time intervals (for example, once every hour) by the broadcast station, and the contents of the EPG data stored in the program information storage/management unit 102 are periodically configured in accordance with the update operation. A program guide generating unit 105, based on the EPG data stored in the program information storage/management unit 102, generates and displays, on the screen of a display 106, a program guide in matrix including a plurality of areas (cells) divided for each program as shown in Fig. 2 and a cursor adapted to move on the program guide and designate the desired cell. Fig. 2 is explained in more detail later.

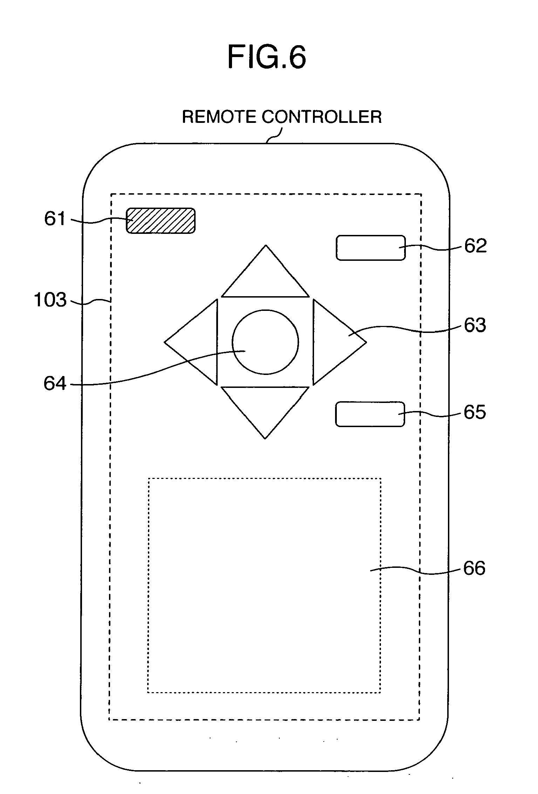

The program recording reservation apparatus according to this embodiment are operated and controlled in response to the user operation of, for example, the input keys 103 arranged on a remote controller. An example of the remote controller with the input keys 102 arranged thereon is shown in Fig. 6.

The input keys 103 arranged on the remote controller shown in Fig. 6 include a power button 61 for switching on/off the power supply of the recording reservation apparatus, a program guide button 62 for displaying the program guide on the screen, four-direction cursor keys 63 for moving the cursor vertically and laterally on the program guide, an "enter" button 64 arranged at the central part of the cursor keys 63 and a cancel button 65. The input keys 103 further include other keys 66 such as a channel key and a volume control key.

The remote control signal generated by the operation of the input keys 103 is received by an input key processing unit 104. The input key processing unit 104 converts the received remote control signal into a command, and outputs the result to the program information storage/management unit 102, the program guide generating unit 105 and the recording reservation information storage/management unit 107. In the case where the user depresses the program guide button 62, for example, the remote controller transmits a remote control signal accordingly. Then, the input key processing unit 104 generates a command for displaying the program guide from the remote control signal, and outputs the command to the program guide generating unit 105. The program guide generating unit 105, in response to the command, acquires the information stored in the program information storage/management unit 102, and generates an image for outputting the program guide to the display 106.

Also, the cell including the desired program in the program guide is designated by the cursor through the cursor keys 63, and further, the "enter" button 64 is depressed. In this way, the recording can be reserved by the recording reservation information storage/management unit 107. Specifically, once the desired program is determined, the recording reservation information storage/management unit 107 acquires, from the program information storage/management unit 102, the broadcast date, the starting time, the ending time and the channel information of the program in the cell thus determined, and stores them as the recording reservation information. Based on the recording reservation information stored in the recording reservation information storage/management unit 107, the recording command processing unit 108 operates to record the program selected on the program guide in the recording unit 109. For example, the recording command processing unit 108 counts the present time with a timer, and when the count reaches the starting time, on the broadcast day, of the selected program acquired and stored in the recording reservation information storage/management unit 107, a power command for turning on the power supply of the recording unit 109, a recording command for carrying out the recording and a tuning command for selecting the channel of the selected program stored in the recording reservation information storage/management unit 107 are transmitted to the recording unit 109. As a result, the selected program is recorded. In the case where the count of the recording command processing unit 108 reaches the broadcast ending time of the selected program stored in the recording reservation information storage/management unit 107, on the other hand, the recording command processing unit 108 transmits a stop command for stopping the recording and a power command for turning off the power supply of the recording unit 109 to the recording unit 109, thereby ending the recording.

The program guide generating unit 105, with reference to the recording reservation information stored in the recording reservation information storage/management unit 107, processes the program reserved for recording in a form of display different from the other programs. Further, the program guide generating unit 105, with reference to the recording reservation information stored in the recording reservation information storage/management unit 107, detects the number of programs reserved for recording in the time zone covering the program in the cell designated by the cursor. In the case where the number of the recording reservations in the particular time zone is compared with and equal to the maximum number of recording reservations determined by the number of the tuners, a message to the effect that the recording reservation is impossible is displayed on the display 106 in response to the program designation by the cursor without depressing the "enter" button 64. This message, as shown in Fig. 2, is displayed in superposition on the program guide. Further, an icon is provided in the balloon of the message indicating that the recording cannot be reserved, and by selecting this item, the programs already reserved for recording in the same time zone are retrieved with reference to the recording reservation information storage/management unit 107, and the reservation can be reset.

Next, an example of the display screen of the program guide according to this embodiment is explained with reference to Fig. 2. Fig. 2 shows an example of displaying the aforementioned message in the program recording reservation apparatus having a maximum of three recording reservations (i.e. three tuners) in the same time zone. The program guide 201 is displayed on the screen of the display 106. A channel display column 202 is arranged at the upper end of the program guide 201, while a time zone display column 203 is arranged at the left end thereof. Specifically, the program guide according to this embodiment is configured in the form of a matrix with the abscissa representing the channels and the ordinate the time. The program guide 201 includes a plurality of program cells 204 constituting areas divided for each program corresponding to the channel display column and the time zone display column. As a result, the program broadcast schedule for each channel is provided by the program guide 201.

Also, the program guide 201 includes a cursor (frame) movable on the program guide 201 for designating the program cell 204 with the desired program displayed therein, whereby the program cell currently designated is visually discriminated from the other program cells. The user can designate the desired program by moving the cursor 205 using the cursor keys 63. According to this embodiment, the program cell 204 of the program reserved for recording is displayed visually discriminably from the other program cells using the recording reservation information stored in the recording reservation information storage/management unit 107. Reference numeral 206 designates the programs reserved for recording and indicated by a color (red, for example) different from that of the other program cells. For example, the program "Documentary" on channel 010, "Variety Show" on channel 030 and "Sport News" on channel 040 are reserved for recording, and therefore, in the example shown in Fig. 2, these three program cells are colored red. Although the programs to be recorded are distinguished from the other programs by using a different color in this example, the brightness may alternatively be differentiated. As a result, which programs are reserved for recording can be easily recognized.

Also, as described above, in the case where the number of the programs reserved for recording in the same time zone as the program in the program cell 204 designated by the cursor (superposed with the cursor) is equal to the maximum number of recording reservations, a balloon message 207 for notifying the user that no more reservation for recording is possible is displayed in supervision on the program guide 201.

Assume, for example, that as shown in Fig. 2, the three programs including "Documentary" on channel 010, "Variety Show" on channel 030 and "Sport News" on channel 040 are already reserved for recording in the time zone of 9:00 to 10:00. The number of the programs reserved for recording is equal to 3, i.e. the maximum number of recording reservations. In the case where the cursor 205 designates the program cell containing "Movie" started on channel 020 at 9:00 included in the time zone where the three programs are already reserved for recording, therefore, a message 207 is displayed in response to the program cell designation of the cursor 205. The message 207 is displayed without depressing the "enter" button 64, and the message 207 can be displayed simply by the user setting the cursor to a program in an arbitrary time zone. Also, the message 207 includes an icon described as "reset reservation", and the user can reset the recording reservation for the three programs already reserved by selecting this icon, i.e. by depressing the "enter" button 64.

As described above, in the case where the recording reservations in the number equal to the maximum number of the recording reservations are registered in the time zone associated with a designated program, the balloon message 207 is displayed. Therefore, the user can easily and quickly confirm whether the program desired for recording can be recorded or not.

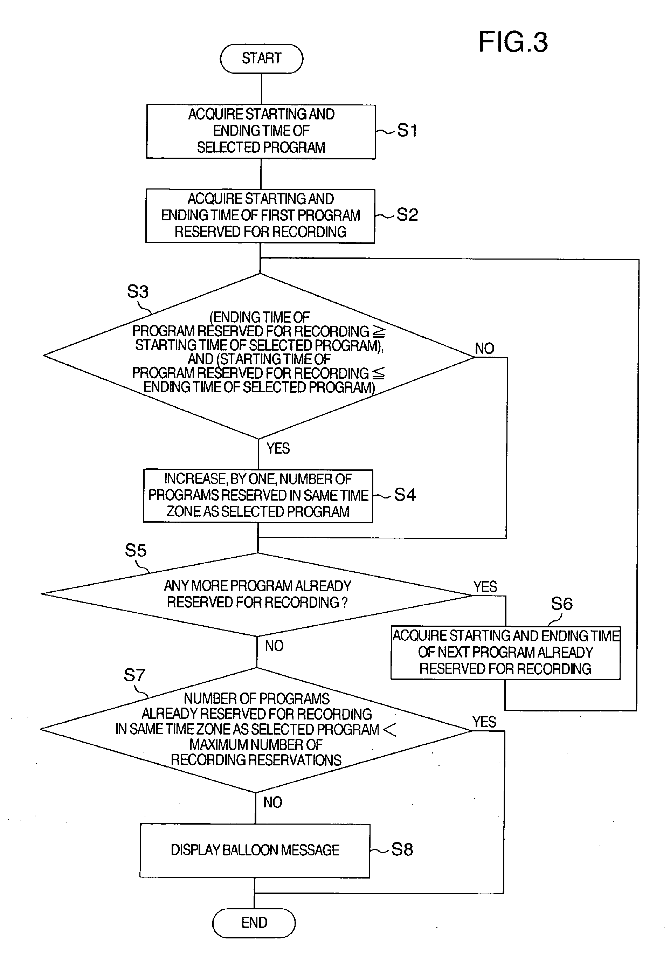

Next, a method of determining whether the number of the programs already reserved for recording in the time zone associated with the program currently selected and displayed in the program cell frame 205 is equal to the maximum number of recording reservations is explained with reference to the flowchart of Fig. 3. The process of the flowchart shown in Fig. 3 is executed by the program guide generating unit 105 after displaying the program cell frame 205.

In step S1 of Fig. 3, the program guide generating unit 105 accesses the data in the program information storage/management unit 102, and acquires the starting time and the ending time of the program currently selected and displayed in the program cell frame 205 on the program guide on display. Next, in step S2, the program guide generating unit 105, by accessing the recording reservation information storage/management unit 107, acquires the starting time and the ending time of the programs already registered for recording reservation.

Next, in step S3, assume that the ending time of a program which is already reserved for recording and acquired by the program guide generating unit 105 in step S2 is not before the starting time of the selected program acquired in step S1 and that the starting time of the program which is already reserved for recording and acquired in step S2 is not after the ending time of the selected program acquired in step S1. Then, in step S4, the number of the programs reserved in the same time zone as the selected program is increased by one, after which step S5 is executed. Otherwise, step S5 is executed directly.

Step S5 checks whether any other program is already reserved for recording or not with reference to the data in the recording reservation information storage/management unit 107. In the case where there is any other program recorded for reservation, step S6 sets the starting time and the ending time of the next reserved program with reference to the data in the recording reservation information storage/management unit 107, after which the process returns to step S3.

In the case where step S5 determines that there is no other program reserved for recording, on the other hand, the process proceeds directly to step S7. Step S7 determines whether the present count on the number of the programs already reserved for recording in the same time zone as the selected program is smaller than the maximum number of the recording reservations or not. In the case where the number of the programs already reserved is smaller, the process is terminated. Otherwise, the process of displaying a balloon message is executed in step S8. The balloon message displayed in step S8 is shown in Fig. 2 as designated by numeral 207. The balloon message 207 is intended to notify the user that the selected program cannot be reserved for recording.

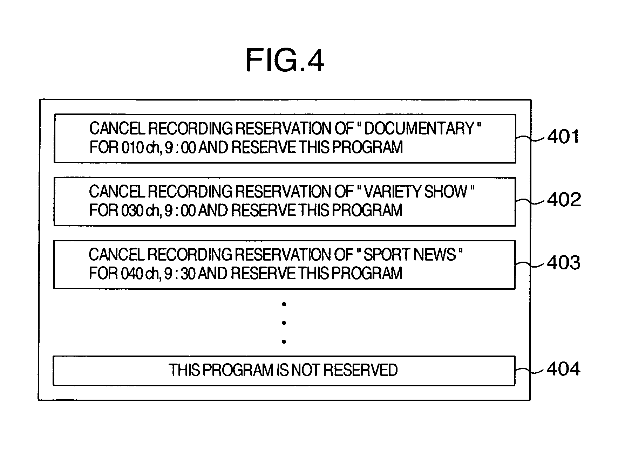

The user is also notified that the selected program can be reserved for recording by canceling any program already reserved for recording in the time zone associated with the selected program. Further, a means is provided for canceling the recording reservation of the programs already registered in the same time zone. Specifically, the "reset reservation" button displayed in the balloon message 207 is selected. In this case, as shown in Fig. 4, the screen is displayed for canceling the registration of the recording reservation for each program already reserved for recording. Thus, the programs 401 to 403 already reserved for recording are selected and the registration thereof canceled. In this way, the selected program is automatically reserved for recording.

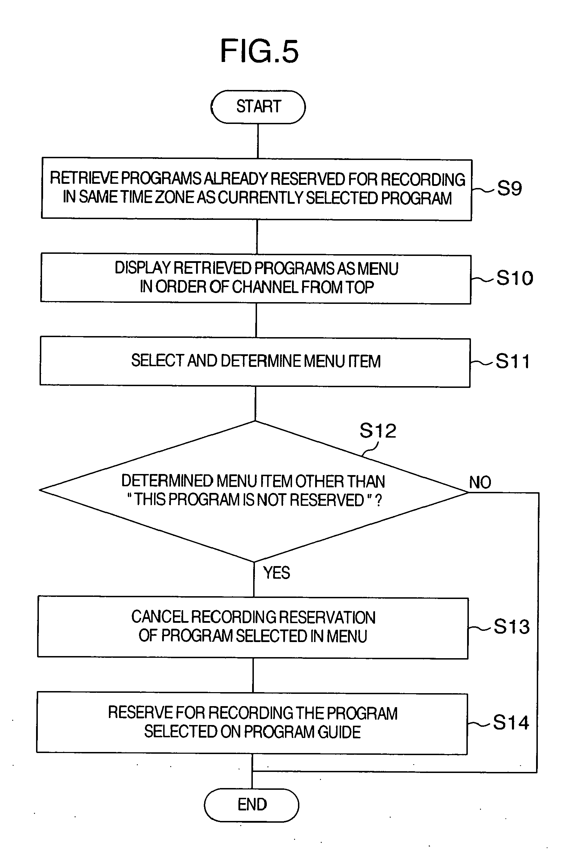

The process upon selection of the "reset reservation' button shown in the message 207 is explained with reference to the flowchart of Fig. 5. After selecting the "reset reservation" button, the process of step S9 is executed in which the program guide generating unit 105 retrieves those of the programs which are already reserved for recording in the same time zone as the currently selected program, with reference to the data in the recording reservation information storage/management unit 107.

Next, in step S10, the retrieved programs are displayed as a menu in the ascending order of channel from the top as indicated by 401 to 403 in Fig. 4. Also, a menu 404 indicating that the selected program is not reserved is displayed. Next, one of the menu items is selected and determined in step S11. Depending on the menu item thus determined, the process is diverged. Specifically, in the case where a menu item other than "this program is not reserved" is determined in step S12, the recording reservation of the program selected on the menu is canceled in step S13. Finally, the program currently selected on the program guide is reserved for recording in step S14, and the screen shown in Fig. 4 is closed. In the case where the menu item "this program is not reserved" is determined in step S12, on the other hand, the screen is shown in Fig. 4 is closed as it is.

As described above, by selecting the button displayed in the balloon message 207, the recording reservation of a program already reserved for recording in the same time zone as the selected program can be canceled and the selected program can easily reserved for recording.

As explained above, according to this embodiment, a message indicating that the program selected on the program guide cannot be reserved for recording is displayed in the case where the number of the recording reservations in the same time zone as the selected program is equal to the maximum number of the recording reservations and the selected program cannot be reserved for recording. Without displaying all the channels by scroll and without actually performing the operation for recording reservation, therefore, it can be easily and quickly confirmed whether the program desired for recording can be recorded or not.

Also, the message described above can contain an icon for resetting (canceling) the existing recording reservation information, and by selecting the icon, the recording reservation information on the programs already reserved for recording in the same time zone as the program selected on the program guide can be reset. As a result, the selected program can be easily reserved for recording.

This invention is applicable to the DVD recorder and the HDD recorder for receiving and recording a TV broadcast program on the one hand and the TV and the personal computer having the recording function on the other.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A program recording apparatus for receiving and recording a TV broadcast program, comprising:
a program information storage unit (102) which stores the TV broadcast program information;
a recording reservation information storage unit (107) which stores the recording reservation information on the programs reserved for recording; and
a program guide generating unit (106) which generates and displays a program guide (201) on the screen based on the program information stored in the program information storage unit and the recording reservation information stored in the recording reservation information storage unit;
wherein a cursor for designating a desired program is movable on the program guide on display; and
wherein in the case where the number of recording reservations in the time zone associated with the program designated by the cursor is equal to the maximum number of recording reservations for the same time zone, said program guide generation unit causes a message (207) to be displayed on the screen in response to the designation of the program.

2. The program recording apparatus according to Claim 1,
wherein in the case where the designated program cannot be reserved for recording, an item for resetting the recording reservation of the programs already reserved for recording is displayed at the same time as and with the message, and by selecting the item, the recording reservation of the programs already registered is reset.

3. The program recording apparatus according to Claim 1,
wherein the message includes the information for notifying the user that the designated program cannot be reserved for recording.

4. The program recording apparatus according to Claim 1,
wherein the message is displayed in superposition on the program guide.

5. The program recording apparatus according to Claim 1,
wherein the program guide is configured in the form of a matrix including a plurality of cells (206) classified for each program, and the program guide generating unit displays the cell containing the reserved program visually discriminably from the cells containing the other programs based on the recording reservation information stored in the recording reservation information storage unit.

6. The program recording apparatus according to Claim 5,
wherein the program guide generating unit displays the cell containing the reserved program in selected one of a different color and a different brightness from the cells containing the other programs.

7. The program recording apparatus according to Claim 1,
wherein the maximum number of recording reservations is equal to the number of tuners controlled by the program recording apparatus.

8. A TV receiving apparatus for receiving the TV broadcast programs, comprising:
a recording unit (109) which records a received program;
a program information storage unit (102) which stores the TV broadcast program information;
a program guide generating unit (105) which displays a program guide (201) showing the program schedule for each channel on the screen using the program information stored in the program information storage unit;
a recording reservation information storage unit (107) which generates and stores the recording reservation information from the time information and the channel information of the program designated in the program guide on display; and
a recording control unit which controls the program recording on the recording unit based on the recording reservation information stored in the recording reservation information storage unit;
wherein in the case where the number of recording reservations in the time zone associated with a designated program is equal to the maximum number of recording reservations for the same time zone, the program guide generating unit causes a message to be displayed on the screen in response to the designation of the program.

9. The TV receiving apparatus according to Claim 8,
wherein the program guide generating unit generates the program guide including the recording reservation information stored in the recording reservation information storage unit.

10. The TV receiving apparatus according to Claim 8,
wherein a program in the program guide is designated by the cursor and the message is displayed in response to the designation by the cursor.

11. The TV receiving apparatus according to Claim 8, which is a TV display device including a display for displaying the receiving program, the program guide and the message.
